# EUROPÄISCHE PATENTSCHRIFT

(11) **EP 1 201 932 B1**
(45) Veröffentlichungstag und Bekanntmachung des Hinweises auf die Patenterteilung: **21.12.2005**
(21) Anmeldenummer: 01124621.2
(22) Anmeldetag: 15.10.2001
(51) Int. Cl.: F04D 29/22, F04D 29/24

(54) **Fördereinrichtung**
Delivery system
Système de distribution

(30) Priorität: 24.10.2000 DE 10052584
(43) Veröffentlichungstag der Anmeldung: 02.05.2002
(60) Teilanmeldung: 04017115.9
(73) Patentinhaber: SIEMENS AKTIENGESELLSCHAFT, 80333 München (DE)
(72) Erfinder: Petzold, Sven, 65191 Wiesbaden (DE)

(56) Entgegenhaltungen:
- EP-A- 0 166 104
- EP-A- 0 208 142
- EP-A- 0 411 431
- DE-A- 19 537 790
- FR-A- 2 138 083
- US-A- 2 570 862
- US-A- 3 773 432
- US-A- 4 618 096
- US-A- 5 225 729
- FUEST, KLAUS: "Elektrische Maschinen und Antriebe" 1989 , VIEWEG , BRAUNSCHWEIG/WIESBADEN XP002250222 * Seite 50, letzter Absatz - Seite 51, Absatz 5; Abbildung 2.26 *

## Beschreibung

Die Erfindung betrifft eine Fördereinrichtung, insbesondere zur Förderung von Waschflüssigkeit in einem Kraftfahrzeug, mit einer in beide Richtungen antreibbaren, zur Förderung der Waschflüssigkeit in Abhängigkeit von der Antriebsrichtung zu einem von zwei Anschlüssen gestalteten Förderpumpe, wobei die Förderpumpe zur Erzeugung eines jeweils vorgesehenen Förderdrucks für jede der Antriebsrichtungen ausgebildet ist.

Aus der EP 04 11 431 A2 ist eine Waschflüssigkeitspumpe bekannt, bei der ein Laufrad in zwei Richtungen antreibbar ist. Durch einen Antrieb des Laufrades in die eine Richtung wird Waschflüssigkeit zu einer Frontscheibe und bei dem Antrieb in die andere Richtung zu einer Heckscheibe gefördert. Über die Anordnung eines Bypass-kanals lassen sich unterschiedliche Förderdrücke festlegen.

Aus der EP 0 166 104 A1 ist eine Zentrifugalpumpe bekannt, bei der Leitschaufeln in Abhängigkeit von einer Drehrichtung einer Antriebswelle ein- oder ausklappen. Bei einem Klemmen oder bei Verschleiß der Leitschaufeln besteht jedoch die Gefahr, dass in einer Richtung ein unzulässig hoher Druck erzeugt wird.

Aus der US 3,773,432 A ist eine Förderpumpe mit gebogenen Leitschaufeln bekannt. In Abhängigkeit von der Antriebsrichtung des Laufrades werden unterschiedliche Drücke erzeugt, welche fest mit der Geometrie der Leitschaufeln in Verbindung stehen.

Weiterhin ist aus der FR 2 138 083 A eine Zentrifugalpumpe bekannt, bei der sich die Leitschaufeln in einer Richtung stärker biegen oder auslenken lassen als in der anderen Richtung. Auch hier kann Verschleiß, Verschmutzung oder dergleichen dazu führen, dass in der Drehrichtung, in der der Druck geringer sein soll als in der anderen Richtung, der Druck unzulässig stark ansteigt.

Bei heutigen Scheibenreinigungsanlagen erfordert die Frontscheibe einen besonders hohen Förderdruck, da der hierfür erzeugte Waschflüssigkeitsstrahl bei zu niedrigem Förderdruck von dem Fahrtwind abgelenkt wird. Eine zu der Frontscheibe geführte Waschflüssigkeitsleitung und die Verbindungselemente werden deshalb für den maximal auftretenden Druck, z. B. bei blockierten Düsen infolge des Einfrierens, ausgelegt. Zur Reinigung der Heckscheibe ist ein im Vergleich zur Frontscheibe geringer Förderdruck erforderlich. Ein hoher Förderdruck führt dazu, dass eine zu der Heckscheibe geführte Waschflüssigkeitsleitung ebenso druckstabil und damit kostenintensiv gestaltet sein muss wie die Frontleitung. Dies führt zudem zu einer sehr aufwendigen Verlegung der Waschflüssigkeitsleitung.

Der Erfindung liegt das Problem zugrunde, eine Fördereinrichtung der eingangs genannten Art so weiterzubilden, dass sich jede Scheibe des Kraftfahrzeuges mit einem vorgesehenen Druck reinigen lässt und dass sich die zu der den geringen Druck benötigenden Scheiben geführte Waschflüssigkeitsleitung besonders kostengünstig fertigen lässt und dass eine nahezu beliebig gestaltete bidirektionale Förderpumpe einfach nachgerüstet werden kann.

Dieses Problem wird erfindungsgemäß dadurch gelöst, dass einer der Anschlüsse mit einem Einlasskanal verbunden ist und dass in der Verbindung ein bei vorgesehenem Druck und Antriebsrichtung schaltendes Überströmventil angeordnet ist.

Durch diese Gestaltung stellt sich der von der Förderpumpe erzeugte Förderdruck in Abhängigkeit von der Antriebsrichtung selbständig auf die vorgesehene Höhe ein. Daher lässt sich beispielsweise die zu der Heckscheibe führende Waschflüsigkeitsleitung mit einem geringen Förderdruck beaufschlagen, während die Waschdüse vor der Frontscheibe mit Waschflüssigkeit höheren Drucks versorgt wird. Daher erfordert ausschließlich die zu der Frontscheibe geführte Waschflüssigkeitsleitung eine erhöhte Druckstabilität. Die zu der Heckscheibe geführte Waschflüssigkeitsleitung und insbesondere die Verbindungselemente lassen sich daher besonders kostengünstig, beispielsweise ohne Elastomer-Dichtelemente fertigen. Die Nachrüstung vorhandener Förderpumpen erfolgt durch die Verbindung der Anschlüsse mit einem Einlasskanal und durch die Anordnung eines bei vorgesehenem Druck und Antriebsrichtung schaltendes Überströmventils in der Verbindung. Die Förderpumpe kann hierbei nahezu beliebig gestaltet sein.

Die Erfindung lässt zahlreiche Ausführungsformen zu. Zur weiteren Verdeutlichung ihres Grundprinzips sind drei davon in den zwei Figuren dargestellt und werden nachfolgend beschrieben. Diese zeigen in
- Figur 1:: schematisch eine erfindungsgemäße Fördereinrichtung,
- Figur 2:: einen Teil eines Pumpenrades der Förderpumpe in der Draufsicht.

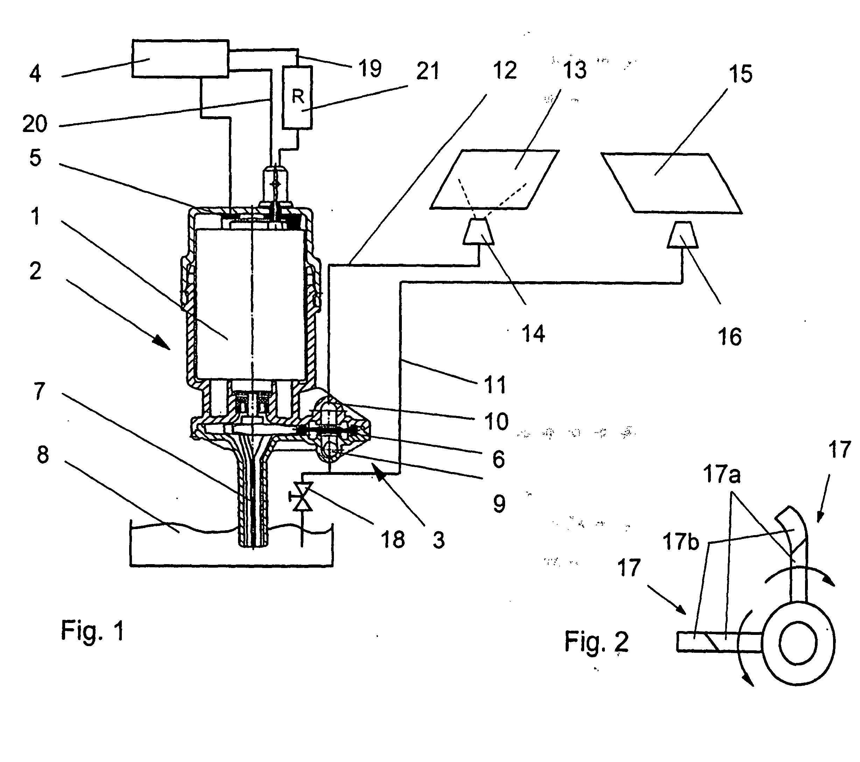

Die Fördereinrichtung in Fig. 1 hat eine von einem Elektromotor 1 angetriebene Förderpumpe 2 und ein an die Förderpumpe 2 angeschlossenes Ventil 3. Der Elektromotor 1 wird über eine Steuereinheit 4 angesteuert und mit elektrischem Strom versorgt. An dem Elektromotor 1 angeordnete Hallsensoren 5 erfassen die Drehrichtung und die Drehzahl und übermitteln elektrische Signale zu der Steuereinheit 4. Das Ventil 3 hat eine Membran 6 und ist in der Zeichnung zur Verdeutlichung geschnitten dargestellt. Die Förderpumpe 2 hat einen Einlasskanal 7, über den sie Waschflüssigkeit aus einem Vorratsbehälter 8 ansaugt. Das Ventil 3 verbindet die Förderpumpe 2 in Abhängigkeit von ihrer Drehrichtung mit zwei Anschlüssen 9, 10. An den Anschlüssen 9, 10 sind Waschflüssigkeitsleitungen 11, 12 angeschlossen. Eine der Waschflüssigkeitsleitungen 11 führt zu einer oder mehreren vor einer Frontscheibe 13 angeordneten Waschdüsen 14. Die andere Waschflüssigkeitsleitung 12 führt zu einer vor einer Heckscheibe 15 des Kraftfahrzeuges angeordneten Waschdüse 16.

In Fig. 2 sind zwei ausgewählte Leitschaufeln 17 der Förderpumpe 2 dargestellt. Die Leitschaufeln 17 setzen sich aus je 2 einander überlappenden Bereichen 17a, 17b zusammen. Der radial innerer Bereich 17a ist formstabil ausgeführt, während der radial äußere Bereich 17b elastisch verformbar ist. Die beiden Bereiche 17a, 17b sind derart zu einander angeordnet, dass sich der äußere Bereich 17b an einer Seite an dem radial inneren Bereich 17a abstützt. Das hat zur Folge, dass sich die Leitschaufeln 17 bei einer Drehrichtung gegen den Uhrzeigersinn nahezu nicht verformen. Die Leitschaufen 17 weisen damit eine Länge auf, die in etwa dem Radius der Pumpenkammer entspricht. In dieser Drehrichtung erzeugt die erfindungsgemäße Förderpumpe 2 einen Förderdruck von 4 bar. Bei einer Umkehrung der Drehrichtung der Förderpumpe 2 verformt sich mangels fehlender Abstützung der elastische Bereich 17b der Leitschaufeln 17, sodass die im Bezug auf den Radius der Pumpenkammer projizierte Länge der Leitschaufeln 17 kleiner wird. Dadurch erzeugt die Förderpumpe 2 mit 3 bar einen geringeren Druck. Da zur Reinigung der Heckscheibe 15 die Förderpumpe 2 im Uhrzeigersinn angetrieben wird, ist der Druck in der zu der Heckscheibe 15 geführten Waschflüssigkeitsleitung 12 sehr klein. Daher kann die zu der Heckscheibe 15 geführte Waschflüssigkeitsleitung 12 besonders einfach und dünnwandig aufgebaut sein. Bei einem Antrieb der Förderpumpe 2 gegen den Uhrzeigersinn lässt sich die Frontscheibe 13 mit einem besonders hohen Druck reinigen und damit ein Ablenken des Waschflüsssigkeitsstrahls durch den Fahrtwind verhindern.

Die Steuereinheit 4 weist zwei Verbindungen 19, 20 mit dem Elektromotor 1 auf. In einer der Verbindungen 20 ist ein ohmscher Widerstand 21 angeordnet. Die Verbindungen 19, 20 werden jeweils für die Ansteuerung des Elektromotors 1 mit der vorgesehenen Drehrichtung genutzt. Hierdurch erhält der Elektromotor 1 in einer seiner Drehrichtungen elektrischen Strom von der Steuereinheit 4 über die Verbindung 19 ohne den Widerstand, während bei einer Ansteuerung des Elektromotors 1 in der entgegengesetzten Drehrichtung die Verbindung 20 mit Widerstand 21 genutzt wird. Der Widerstand 21 begrenzt die Leistung des Elektromotors 1 und damit auch den von der Förderpumpe 2 erzeugten Förderdruck. Durch eine geeignete Wahl der Größe des Widerstandes 21 lässt sich die Heckscheibe 15 mit einem geringen Druck und die Frontscheibe 13 mit einem hohen Druck reinigen. Alternativ dazu lassen sich zur Begrenzung der Leistung des Elektromotors 1 in Abhängigkeit von seiner Drehrichtung der Kommutierungswinkel verändern, sowie mittels einer geeigneten Wahl der Steuereinheit 4 eine Pulsweitenmodulation in Abhängigkeit von der vorgesehenen Drehrichtung des Elektromotors 1 durchführen. Bei diesen Alternativen wird auf den in der Zeichnung dargestellten Widerstand 21 verzichtet.

Die in der Zeichnung dargestellten verschiedenen Ausführungsformen der erfindungsgemäßen Fördereinrichtung zur Begrenzung des Drucks in der zu der Heckscheibe 15 führenden Waschflüssigkeitsleitung 12 können wahlweise einzeln oder in Kombinationen eingesetzt werden.

## Patentansprüche

1. Fördereinrichtung, insbesondere zur Förderung von Waschflüssigkeit in einem Kraftfahrzeug, mit einer in beide Richtungen antreibbaren, zur Förderung der Waschflüssigkeit in Abhängigkeit von der Antriebsrichtung zu einem von zwei Anschlüssen (9, 10) gestalteten Förderpumpe (2), wobei die Förderpumpe (2) zur Erzeugung eines jeweils vorgesehenen Förderdrucks für jede der Antriebsrichtungen ausgebildet ist, **dadurch gekennzeichnet, dass** einer der Anschlüsse (10) mit einem Einlasskanal (7) verbunden ist und dass in der Verbindung ein bei vorgesehenem Druck und Antriebsrichtung schaltendes Überströmventil (18) angeordnet ist.

2. Fördereinrichtung nach Anspruch 1, **dadurch gekennzeichnet, dass** die Leitschaufeln (17) eines in beide Drehrichtungen antreibbaren Laufrades der Förderpumpe (2) für die jeweiligen Antriebsrichtungen vorgesehene, den Förderdrücken entsprechende Abmessungen und Neigungswinkel haben.

3. Fördereinrichtung nach Anspruch 1 und 2, **dadurch gekennzeichnet, dass** die Leitschaufeln (17) in eine Drehrichtung verformbar gestaltet sind.

4. Fördereinrichtung nach zumindest einem der vorhergehenden Ansprüche, **dadurch gekennzeichnet, dass** die Leitschaufeln (17) aus je 2 sich überlappenden Bereichen (17a, 17b) bestehen, wobei sich an dem radial inneren formstabilen Bereich (17a) ein radial äußerer, elastisch verformbarer Bereich (17b) anschließt, der sich einseitig im inneren Bereich abstützt.

## Claims

1. Delivery system, in particular for delivering washer fluid in a motor vehicle, having a delivery pump (2) which can be driven in both directions and is designed for delivering washer fluid to one of two connections (9, 10) as a function of the driving device, the delivery pump (2) being designed to generate a respectively designated delivery pressure for each of the driving devices, **characterized in that** one of the connections (10) is connected to an inlet passage (7) and **in that** an overflow valve (18) which switches at a designated pressure and driving direction is arranged in the connection.

2. Delivery system according to Claim 1, **characterized in that** the guide vanes (17) of an impeller of the delivery pump (2), which impeller is drivable in both directions of rotation, have dimensions and angles of inclination which are provided for the respective driving devices and correspond to the delivery pressures.

3. Delivery system according to Claims 1 and 2, **characterized in that** the guide vanes (17) are designed deformably in one direction of rotation.

4. Delivery system according to at least one of the preceding claims, **characterized in that** the guide vanes (17) comprise two overlapping regions (17a, 17b) in each case, with the radially inner, dimensionally stable region (17a) being adjoined by a radially outer, elastically deformable region (17b) which is supported on one side in the inner region.

## Revendications

1. Système d'alimentation, destiné, notamment, à l'acheminement de liquide de nettoyage dans un véhicule automobile, comportant une pompe d'alimentation (2) pouvant fonctionner dans les deux sens et conçue pour acheminer du liquide de nettoyage, en fonction du sens de son entraînement, vers l'un de deux branchements (9, 10), où la pompe d'alimentation (2) est conçue pour produire une pression d'alimentation prévue pour chacun des deux sens d'entraînement **caractérisé par le fait que** l'un des branchements (10) est relié à un canal d'admission (7) et qu'une soupape de décharge (18), qui se déclenche à une pression donnée et pour un sens d'entraînement, est disposée dans la liaison.

2. Système d'alimentation selon la revendication 1 **caractérisé par le fait que** les aubes directrices (17) d'une roue à au-bets de la pompe d'alimentation (2) pouvant être entraînée dans les deux sens de rotation ont des dimensions et des angles d'inclinaison prévus correspondant à chaque sens d'entraînement.

3. Système d'alimentation selon la revendication 1 et 2 **caractérisé par le fait que** les aubes directrices (17) sont déformables dans un sens de rotation.

4. Système d'alimentation selon au moins l'une des revendications précédentes **caractérisé par le fait que** les aubes directrices (17) se composent chacune de 2 parties qui se chevauchent, où la partie (17a) radialement intérieure et dont la forme est stable, est suivie d'une partie (17b) radialement extérieure et se déformant élastiquement, qui s'appuie d'un côté sur la partie intérieure.
